(19) Europäisches Patentamt
European Patent Office
Office européen des brevets

(11) **EP 2 815 855 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
***B25J 9/16*** *(2006.01)*

(21) Anmeldenummer: **14001781.5**

(22) Anmeldetag: **20.05.2014**

(54) **Überwachen eines kinematisch redundanten Roboters**

Monitoring of a kinematically redundant robot

Surveillance d'un robot cinétiquement redondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2013 DE 102013010290**

(43) Veröffentlichungstag der Anmeldung:
**24.12.2014 Patentblatt 2014/52**

(73) Patentinhaber: **KUKA Deutschland GmbH 86165 Augsburg (DE)**

(72) Erfinder: **Ueberle, Marc-Walter 86316 Friedberg (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**EP-A2- 1 302 285     DE-B3-102005 054 575**

- HATTORI H ET AL: "A realization of compliant motion by a decentralized control in redundant manipulator", ADVANCED INTELLIGENT MECHATRONICS, 2001. PROCEEDINGS. 2001 IEEE/ASME INTERNATIONAL CONFERENCE ON 8-12 JULY 2001, PISCATAWAY, NJ, USA,IEEE, Bd. 2, 8. Juli 2001 (2001-07-08), Seiten 799-803, XP010553354, ISBN: 978-0-7803-6736-4
- OWEN W S ET AL: "On-line trajectory resolution for two-armed systems with conflicting performance criteria", MECHANISM AND MACHINE THEORY, PERGAMON, AMSTERDAM, NL, Bd. 44, Nr. 5, 1. Mai 2009 (2009-05-01), Seiten 949-965, XP025989732, ISSN: 0094-114X, DOI: 10.1016/J.MECHMACHTHEORY.2008.06.001 [gefunden am 2008-07-26]
- ALESSANDRO DE LUCA ET AL: "Exploiting robot redundancy in collision detection and reaction", INTELLIGENT ROBOTS AND SYSTEMS, 2008. IROS 2008. IEEE/RSJ INTERNATIONAL CONFERENCE ON, IEEE, PISCATAWAY, NJ, USA, 22. September 2008 (2008-09-22), Seiten 3299-3305, XP031348736, ISBN: 978-1-4244-2057-5

**Beschreibung**

Die vorliegende Erfindung betrifft ein Verfahren zum Überwachen eines kinematisch redundanten Roboters sowie einen Roboter mit einem Steuermittel und ein Computerprogrammprodukt mit einem Programmcode zur Durchführung eines solchen Verfahrens.

Roboter können auf ihre Umgebung beabsichtigt - zum Beispiel bei Fügeoperationen - oder auch unerwünscht - beispielsweise bei einer Kollision - Kräfte ausüben, wobei zur kompakteren Darstellung vorliegend auch antiparallele Kräftepaare, d.h. Drehmomente, verallgemeinernd als Kräfte bezeichnet werden.

Nach betriebsinterner Praxis ist es daher bekannt, Gelenkkräfte $\tau$ zu erfassen und auf deren Basis modellbasiert extern induzierte Gelenkkräfte $\hat{\tau}_e$ abzuschätzen, die durch einen Kontakt des Roboters mit der Umgebung in den Gelenken resultieren.

Aus diesen Gelenkkräften können bei kinematisch redundanten Robotern Wirkkräfte $\hat{f}_w$ im Arbeitsraum zwischen einer roboterfesten Referenz, insbesondere dem TCP des Roboters, und der Umgebung abgeschätzt und überwacht werden, insbesondere mittels einer sogenannten Pseudoinversen der transponierten Jacobimatrix $(J^T)^\#$ :

$$\hat{f}_W = \left(J^T\right)^\# \cdot \hat{\tau}_e$$

Überschreitet die solcherart abgeschätzte Wirkkraft am TCP einen Grenzwert, wird eine Sicherheitsreaktion ausgelöst, beispielsweise der Roboter stillgesetzt oder zurückbewegt.

Insbesondere Mess- und Modellierungsungenauigkeiten, die sich auf die Pseudoinverse $(J^T)^\#$ auswirken, können dabei zu Fehlern für die abgeschätzte Wirkkraft $\hat{f}_w$ an der roboterfesten Referenz führen. Zusätzlich oder alternativ können Gelenkmomente aufgrund von Kontaktkräften, die auf einen vom TCP beabstandeten Punkt des Roboters einwirken, fälschlicherweise auf eine am TCP einwirkende fiktive Wirkkraft $\hat{f}_w$ projiziert werden. Insbesondere, falls sich die aus dieser vom TCP beabstandeten Kontaktkraft ergebenden Gelenkmomente im Wesentlichen im Nullraum der Pseudoinversen der transponierten Jacobimatrix befinden, wird eine betragsmäßig sehr geringe Wirkkraft abgeschätzt und keine Sicherheitsreaktion ausgelöst.

H. Hattori, K. Ohnishi schlagen in "A Realization of Compliant Motion by a Decentralized Control in Redundant Manipulator", Proc. IEEE/ASME AIM 2001, 8. Juli 2001, Bd. 2, S. 799-803, eine dezentrale Regelung eines redundanten Roboters vor, indem dieser in unabhängig geregelte Subsystem aufgeteilt wird und diese impedanzgeregelt werden, so dass sie unabhängig Hindernissen nachgeben können.

Aufgabe der vorliegenden Erfindung ist es, den Betrieb eines kinematisch redundanten Roboters zu verbessern, insbesondere wenigstens einen der vorstehend geschilderten Nachteile zu reduzieren.

Diese Aufgabe wird durch ein Verfahren mit den Merkmalen des Anspruchs 1 gelöst. Anspruch 4 stellt einen Roboter mit einem Steuermittel zur Durchführung eines solchen Verfahrens unter Schutz, Anspruch 5 ein entsprechendes Computerprogrammprodukt. Die Unteransprüche betreffen vorteilhafte Weiterbildungen.

Nach einem Aspekt der vorliegenden Erfindung wird ein kinematisch redundanter Roboter überwacht. Unter einem kinematisch redundanten Roboter wird vorliegend insbesondere ein Roboter mit einer roboterfesten Referenz, insbesondere einem Werkzeug(flansch)koordinatensystem bzw. TCP ("Tool Center Point") verstanden, deren Jacobimatrix $J$ nicht quadratisch ist und/oder keinen vollen Rang hat, wobei die Jacobimatrix in fachüblicher Weise als Matrix der partiellen Ableitungen der Position oder Geschwindigkeit der roboterfesten Referenz $x$ im Arbeitsraum nach den Minimal-, insbesondere Gelenkkoordinaten bzw. -geschwindigkeiten, insbesondere Gelenkwinkeln, des Roboters definiert ist:

$$\frac{d\mathbf{x}}{dt} = \frac{\partial \mathbf{x}}{\partial \mathbf{q}} \cdot \frac{d\mathbf{q}}{dt} = \mathbf{J}(\mathbf{q})\frac{d\mathbf{q}}{dt}$$

Da die Geschwindigkeit der roboterfesten Referenz maximal drei kartesische bzw. Translationsgeschwindigkeiten und drei Winkel- bzw. Rotationsgeschwindigkeiten aufweist (dim($x$) $\leq$ 6), ist insbesondere ein Roboter mit sieben oder mehr Gelenken (dim($q$) $\geq$ 7) kinematisch redundant. Auch ein Roboter mit sechs oder weniger Gelenken kann kinematisch redundant sein, wenn beispielsweise nur die Translationsgeschwindigkeiten der roboterfesten Referenz bzw. keine Rotationsgeschwindigkeiten an der roboterfesten Referenz berücksichtigt werden.

In einer Ausführung werden, insbesondere durch ein Erfassungsmittel, Gelenkkräfte, insbesondere Gelenkmomente, die in den Gelenken des Roboters wirken, erfasst. Das Erfassungsmittel kann in einer Weiterbildung einen oder mehrere Kraft-, insbesondere Momentensensoren, aufweisen, die an einer oder mehreren, vorzugsweise allen, Gelenkachsen, insbesondere Abtriebsachsen von Gelenkantrieben, des Roboters angeordnet sind. Zusätzlich oder alternativ können, insbesondere durch das Erfassungsmittel, Motorströme der Gelenkantriebe und/ oder Gelenkbeschleunigungen erfasst und hieraus Gelenkkräfte, insbesondere Gelenkmomente, erfasst, insbesondere abgeschätzt werden.

Auf Basis der erfassten Gelenkkräfte wird, insbesondere durch ein Verarbeitungsmittel, eine externe Wirkkraft im Arbeitsraum zwischen einer roboterfesten Referenz und einer Umgebung des Roboters, insbesondere eine Kraft am TCP, ermittelt.

Hierzu werden in einer Ausführung aus den erfassten Gelenkkräften modellbasiert extern induzierte Gelenkkräfte abgeschätzt, beispielsweise über einen Störgrößenbeobachter oder indem von den erfassten Gelenkkräften Antriebs-, Trägheits-, Gravitations-, Reibungs- und/oder ähnliche, robotereigene Gelenkkraftanteile subtrahiert werden. Wird der Roboter in fachüblicher Weise durch die Bewegungsgleichungen

$$M(q) \cdot \frac{d^2 q}{dt^2} - h\left(q, \frac{dq}{dt}\right) = \tau$$

mit der Massenmatrix $M$ und den Gelenkkräften $\tau$ modelliert, können bei bekannten Minimalkoordinaten $q$ die extern induzierten Gelenkkräfte $\hat{\tau}_e$ abgeschätzt werden, die in den Gelenken durch einen Kontakt mit der Umgebung resultieren. Die erfassten oder die hieraus ermittelten, extern induzierten Gelenkkräfte werden erfindungsgemäß mittels einer linearen Abbildung, insbesondere einer Pseudoinversen einer transponierten Jacobimatrix der roboterfesten Referenz, auf die externe Wirkkraft abgebildet:

$$\hat{f}_W = \left(J^T\right)^{\#} \cdot \hat{\tau}_e$$

Die Pseudoinverse einer (transponierten) Jacobimatrix kann insbesondere in fachüblicher Weise definiert sein durch

$$J^{\#} = A^{-1} \cdot J^T \cdot \left(J \cdot A^{-1} \cdot J^T\right)^{-1} \quad bzw.$$

$$\left(J^T\right)^{\#} = A^{-1} \cdot J \cdot \left(J^T \cdot A^{-1} \cdot J\right)^{-1}$$

mit der Gewichtungsmatrix $A$. Diese ist in einer Ausführung die Einheitsmatrix, so dass die Pseudoinverse die Moore-Penrose-Pseudoinverse ist. In einer anderen Ausführung ist die Gewichtungsmatrix $A$ die Massenmatrix $M$ des Roboters.

Gleichermaßen kann die externe Wirkkraft auch auf andere Weise auf Basis der erfassten Gelenkkräfte ermittelt werden, beispielsweise durch Messen und Abspeichern von Paaren von erfassten oder hieraus ermittelten, extern induzierten Gelenkkräften und korrespondierenden Wirkkräften und Interpolation dieser abgespeicherten Paare für aktuell erfasste bzw. ermittelte Gelenkkräfte.

Zusätzlich zu der externen Wirkkraft wird nun nach einem Aspekt der vorliegenden Erfindung eine weitere Überwachungsgröße, die - wenigstens im Wesentlichen - unabhängig von einer auf die roboterfeste Referenz wirkenden externen Kraft ist, auf Basis der erfassten oder hieraus ermittelten, extern induzierten Gelenkkräfte ermittelt. Diese weitere Überwachungsgröße kann insbesondere von einer externen Kraft abhängen, die der Roboter beabstandet von der roboterfesten Referenz, insbesondere durch ein Glied oder Gelenk, auf die Umgebung ausübt bzw. von dieser erfährt.

Wenn der Roboter beabsichtigt alleine mit der roboterfesten Referenz die Umgebung kontaktiert bzw. nur an der roboterfesten Referenz im Arbeitsraum eine Kraft auftritt, ist die weitere Überwachungsgröße in einer Ausführung, wenigstens im Wesentlichen, insbesondere bis auf Modell- und/oder Messungenauigkeiten, gleich Null. Entsprechend kann anhand einer, insbesondere signifikanten bzw. ausreichend großen, weiteren Überwachungsgröße erkannt werden, dass der Roboter mit einer von der roboterfesten Referenz beabstandeten Oberfläche die Umgebung, insbesondere ein Hindernis, kontaktiert. Bei Modellfehlern in der Ermittlung der externen Wirkkraft können sich ebenfalls Anteile ergeben, die in die weitere Überwachungsgröße eingehen. Entsprechend kann zusätzlich oder alternativ zu einem von der roboterfesten Referenz beabstandeten Umgebungskontakt auch eine Modellierungsungenauigkeit erkannt werden, die zu einer unrichtigen Ermittlung der externen Wirkkraft führt. Somit kann zusätzlich oder alternativ zu einem von der roboterfesten Referenz beabstandeten Umgebungskontakt die Plausibilität der Ermittlung der externen Wirkkraft überprüft werden.

In einer Ausführung entspricht diese weitere Überwachungsgröße einer von der roboterfesten Referenz beabstandeten externen Kraft. Sie wird daher im Folgenden auch als Quetschkraft bezeichnet, ohne dass diese Bezeichnung die weitere externe Kraft in irgendeiner Weise beschränken soll. Diese Quetschkraft kann in analoger Weise wie die Wirkkraft ermittelt werden, insbesondere durch Messen und Abspeichern von Paaren von Gelenkkräften und korrespondierenden Quetschkräften und Interpolation dieser abgespeicherten Paare für aktuelle Gelenkkräfte oder durch Abbilden der erfassten oder hieraus ermittelten, extern induzierten Gelenkkräfte mittels einer Pseudoinversen einer transponierten Jacobimatrix einer von der roboterfesten Referenz beabstandeten Roboteroberfläche, insbesondere eines Glieds oder Gelenks, auf die externe Quetschkraft.

Erfindungsgemäß wird die weitere Überwachungsgröße durch Multiplikation der Gelenkkräfte mit einem Nullraumprojektionsoperator der Pseudoinversen der transponierten Jacobimatrix der roboterfesten Referenz ermittelt. Der Nullraumprojektionsoperator einer Pseudoinversen einer transponierten Jacobimatrix kann insbesondere in fachüblicher Weise definiert sein durch

$$B = \left[I - J^T \cdot \left(J^T\right)^{\#}\right]$$

mit der Einheitsmatrix $I$. Mit anderen Worten wird als weitere Überwachungsgröße in einer Ausführung der Anteil der erfassten oder hieraus ermittelten, extern induzierten Gelenkkräfte verwendet, der durch die Pseudoinverse der transponierten Jacobimatrix auf Null abgebildet wird:

$$\hat{f}_W = \left(J^T\right)^{\#} \cdot \hat{\tau}_e$$

$$\hat{\boldsymbol{\tau}}_{NS} = \left[ \mathbf{I} - \mathbf{J}^T \cdot \left( \mathbf{J}^T \right)^{\#} \right] \cdot \hat{\boldsymbol{\tau}}_e$$

Dies lässt sich auch physikalisch nachvollziehen: bei einem kinematisch redundanten Roboter werden die Minimalkoordinaten eindeutig auf eine Position, insbesondere Lage und/oder Orientierung, einer roboterfesten Referenz bzw. einer hiervon beabstandeten Roboteroberfläche abgebildet bzw. legen diese eindeutig fest. Umgekehrt existieren jedoch zu einer Position unterschiedliche Minimalkoordinaten. Entsprechend werden externe Wirkkräfte an der roboterfesten Referenz, insbesondere dem TCP, zwar eindeutig auf Gelenkkräfte, insbesondere extern induzierte Gelenkkräfte, abgebildet. Umgekehrt können jedoch Gelenkkräfte, insbesondere extern induzierte Gelenkkräfte, auftreten, die externen Quetschkräften entsprechen, welche nicht an der roboterfesten Referenz, sondern an der hiervon beabstandeten Roboteroberfläche wirken. Solche Gelenkkräfte können bei der Abbildung von Gelenkkräften auf die externe Wirkkraft, insbesondere durch die Pseudoinverse der transponierten Jacobimatrix, teilweise oder vollständig ausgeblendet bzw. in den Nullraum dieser linearen Abbildung projiziert werden. Entsprechend wird in einer Ausführung der vorliegenden Erfindung der Nullraumanteil dieser linearen Abbildung, allgemein einer Abbildung von erfassten oder hieraus ermittelten, extern induzierten Gelenkkräften, überwacht. Anhand dieser Überwachungsgröße kann ein (weiterer) Umgebungskontakt des redundanten Roboters erkannt und/oder eine Plausibilität der ermittelten externen Wirkkraft überprüft werden.

Entsprechend wird in einer Ausführung, insbesondere durch ein Überwachungsmittel, die ermittelte externe Wirkkraft und die weitere Überwachungsgröße, insbesondere die ermittelte externe Quetschkraft und/oder der Nullraumanteil der Gelenkkräfte, insbesondere extern induzierter Gelenkkräfte, überwacht und eine Sicherheitsreaktion ausgelöst, wenn die ermittelte externe Wirkkraft oder die weitere Überwachungsgröße eine Überwachungsbedingung erfüllt. Eine Kraft oder eine Überwachungsgröße kann in einer Ausführung eine Überwachungsbedingung erfüllen, wenn eine Norm, insbesondere eine Betrags- oder Maximums-Norm, der Kraft bzw. Überwachungsgröße oder eines Teiles hiervon, insbesondere eines Teilvektors der Kraft bzw. Überwachungsgröße, einen vorgegebenen Grenzwert über- oder unterschreitet, insbesondere ein Betrag der Wirkkraft bzw. Überwachungsgröße oder eine maximale Komponente der Wirkkraft bzw. Überwachungsgröße einen vorgegebenen Grenzwert über- oder unterschreitet. Beispielsweise kann eine Wirkkraft in einen Teilvektor, der einer physikalischen, ein-, zwei- oder dreidimensionalen Kraft entspricht, und einen Teilvektor aufgeteilt werden, der einem physikalischen, ein-, zwei- oder dreidimensionalen Drehmoment entspricht. Diese beiden Teilvektoren, beispielsweise deren Beträge, maximale Komponenten oder dergleichen, können dann jeweils überwacht werden. Gleiches gilt analog für die weitere Überwachungsgröße.

Die Überwachungsbedingung für die Wirkkraft und für die weitere Überwachungsgröße kann identisch sein. Gleichermaßen kann für die weitere Überwachungsgröße eine andere Überwachungsbedingung vorgegeben werden. Insbesondere kann es sinnvoll sein, die weitere Überwachungsgröße stärker zu beschränken als zulässige Wirkkräfte, die beispielsweise zum Fügen erforderlich sind. Entsprechend ist in einer Ausführung ein vorgegebener Grenzwert für die weitere Überwachungsgröße geringer als für die Wirkkraft.

Die Überwachungsbedingung für die Wirkkraft und/oder die weitere Überwachungsgröße kann in einer Ausführung variabel vorgebbar sein. Insbesondere kann ein vorgegebener Grenzwert für die weitere Überwachungsgröße und/oder die Wirkkraft parametrierbar sein.

Wenn die ermittelte externe Wirkkraft die vorgegebene Überwachungsbedingung erfüllt, wird eine Sicherheitsreaktion ausgelöst, vorzugsweise ein STOP 0, ein STOP 1 oder ein STOP 2 oder eine Rückzugbewegung des Roboters. Wenn die ermittelte weitere Überwachungsgröße die vorgegebene Überwachungsbedingung erfüllt, kann dieselbe Sicherheitsreaktion ausgelöst werden wie bei der Erfüllung der Überwachungsbedingung der Wirkkraft. Gleichermaßen kann eine von der Sicherheitsreaktion für die Wirkkraft verschiedene Sicherheitsreaktion ausgelöst werden, wenn die ermittelte weitere Überwachungsgröße die vorgegebene Überwachungsbedingung erfüllt, insbesondere ein höherrangigerer STOP (etwa ein STOP 0 für die weitere Überwachungsgröße gegenüber einem STOP 1 für die Wirkkraft) oder eine Ausweichbewegung, insbesondere eine Umorientierung unter Beibehaltung einer Position der roboterfesten Referenz.

Nach einem Aspekt der vorliegenden Erfindung weist ein Roboter ein Steuermittel auf, das zur Durchführung eines hier beschriebenen Verfahrens eingerichtet ist. Nach einem Aspekt weist ein Computerprogrammprodukt, insbesondere ein computerlesbares Speichermedium, einen Programmcode auf, der dazu eingerichtet ist, ein hier beschriebenes Verfahren durchzuführen, wenn das Programm durch ein Steuermittel des Roboters ausgeführt wird.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen und damit insbesondere den Roboter überwachen kann.

Eine Ausführung der vorliegenden Erfindung lässt sich auch wie folgt veranschaulichen: bei einem kinematisch redundanten Roboter werden Gelenkkräfte, insbesondere extern induzierte Gelenkkräfte, zum Einen auf eine externe Wirkkraft abgebildet, die an einer roboterfesten Referenz, insbesondere einem TCP, wirkt. Diese externe Wirkkraft wird überwacht und löst bei Überschreiten eines vorgegebenen Grenzwertes eine Sicherheitsreaktion aus.

Bei dieser Abbildung werden in einer Ausführung sieben oder mehr Gelenkkräfte des sieben- oder mehrachsigen Roboters auf maximal sechs Komponenten der externen Wirkkraft (drei Komponenten eines gebundenen Kraftvektors und drei Komponenten eines ungebundenen Drehmomentvektors) abgebildet. Mithin wird - aufgrund der Abbildung durch die Pseudoinverse - nicht die volle Information aus den Gelenkkräften ausgenutzt. Stattdessen werden Gelenkkräfte, die aus einer externen Quetschkraft resultieren, durch diese Abbildung ausgeblendet.

Daher werden in einer Ausführung die Gelenkkräfte, insbesondere die extern induzierten Gelenkkräfte, zum Anderen auch auf eine weitere Überwachungsgröße, die - wenigstens im Wesentlichen - unabhängig von einer auf die roboterfeste Referenz wirkenden externen Kraft ist, abgebildet. Auch diese weitere Überwachungsgröße löst bei Überschreiten eines vorgegebenen Grenzwertes eine Sicherheitsreaktion aus. Wenn in einer Weiterbildung der Nullraumprojektionsoperator der Abbildung auf die Wirkkraft für die Abbildung der weiteren Überwachungsgröße genutzt wird, wird somit gerade der ausgeblendete Nullraumanteil der Gelenkkräfte, d.h. die bisher ungenutzte Information aus den Gelenkkräften ausgenutzt. Da sich sowohl externe Quetschkräfte, die sich am TCP nicht oder nur geringfügig auswirken, als auch Modellierungsungenauigkeiten in einer solcherart ermittelten weiteren Überwachungsgröße auswirken, kann durch deren Überwachung die Plausibilität der ermittelten Wirkkraft, insbesondere die Genauigkeit der dieser zugrundeliegenden Modellierung, und zusätzlich oder alternativ eine externe Quetschkraft überprüft werden, mit der der redundante Roboter ein Hindernis einquetschen kann.

Allgemein wird nach einem Aspekt der vorliegenden Erfindung eine weitere Überwachungsgröße auf Basis von Gelenkkräften ermittelt, die auch bei einer, wenigstens im Wesentlichen, kräftefreien roboterfesten Referenz bzw. ohne eine externe Wirkkraft an der roboterfesten Referenz auftreten können. Überschreitet diese weitere Überwachungsgröße einen vorgegebenen Grenzwert, wird eine Sicherheitsreaktion ausgelöst.

Weitere Vorteile und Merkmale ergeben sich aus den Unteransprüchen und den Ausführungsbeispielen. Hierzu zeigt, teilweise schematisiert:

Fig. 1: einen Roboter nach einer Ausführung der vorliegenden Erfindung; und

Fig. 2: ein Verfahren nach einer Ausführung der vorliegenden Erfindung.

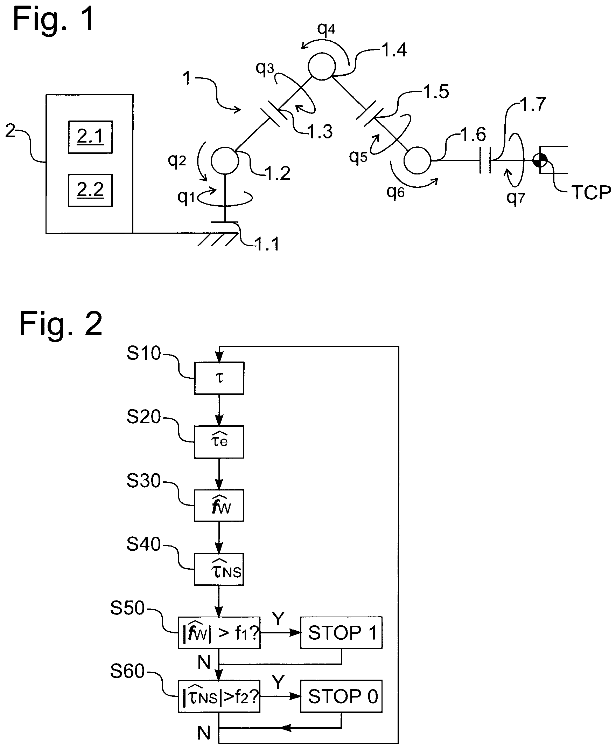

Fig. 1 zeigt einen kinematisch redundanten siebenachsigen Leichtbauroboter 1 nach einer Ausführung der vorliegenden Erfindung mit sieben Gelenken, die Gelenkwinkel $q_1$ - $q_7$ = $\boldsymbol{q}$ aufweisen, einem TCP an einem Werkzeug(flansch) und einem Steuermittel 2, welches ein Verfahren nach einer Ausführung der vorliegenden Erfindung ausführt, das nachfolgend mit Bezug auf Fig. 2 näher erläutert wird.

In einem Schritt S10 werden Gelenkmomente $\tau_1$ - $\tau_7$ = $\tau$ durch Gelenkmomentsensoren 1.1 - 1.7 eines Erfassungsmittels des Steuermittels 2 zum Erfassen von Gelenkkräften erfasst. Aus diesen werden in einem Schritt S20 durch ein Verarbeitungsmittel 2.1 des Steuermittels 2 modellbasiert extern induzierte Gelenkkräfte $\hat{\tau}_e$ abgeschätzt, indem Trägheits-, Gravitations-, Antriebs- und ähnliche roboterinterne Anteile von den erfassten Gelenkkräften $\tau$ subtrahiert werden.

In einem Schritt S30 werden durch das Verarbeitungsmittel die solcherart ermittelten extern induzierten Gelenkkräften $\hat{\tau}_e$ durch Multiplikation mit der mit der Massenmatrix M des Roboters 1 gewichteten Pseudoinversen der transponierten Jacobimatrix des TCPs auf die externe Wirkkraft abgebildet:

$$\hat{\boldsymbol{f}}_W = \left(\boldsymbol{J}^T\right)^{\#} \cdot \hat{\boldsymbol{\tau}}_e$$

In einem Schritt S40 wird durch das Verarbeitungsmittel vorab, parallel oder anschließend aus den extern induzierten Gelenkkräften $\hat{\tau}_e$ durch Multiplikation mit dem Nullraumprojektionsoperator dieser transponierten Jacobimatrix eine weitere Überwachungsgröße ermittelt:

$$\hat{\boldsymbol{\tau}}_{NS} = \left[\mathbf{I} - \boldsymbol{J}^T \cdot \left(\boldsymbol{J}^T\right)^{\#}\right] \cdot \hat{\boldsymbol{\tau}}_e$$

In Schritten S50, S60 wird durch ein Überwachungsmittel 2.2 des Steuermittels 2 überwacht, ob ein Betrag der Wirkkraft (Schritt S50) oder der weiteren Überwachungsgröße (Schritt S60) einen vorgegebenen Grenzwert $f_1$ bzw. $f_2$ überschreitet. Ist dies der Fall ("Y" in Schritt S50 bzw. S60), wird ein STOP 1 (bei Überschreiten des Grenzwerts $f_1$ durch die Wirkkraft) bzw. ein STOP 0 (bei Überschreiten des Grenzwerts $f_2$ durch die weitere Überwachungsgröße) ausgelöst. Verarbeitungs- und Überwachungsmittel können insbesondere durch einen entsprechend programmtechnisch eingerichteten Computer implementiert sein.

Bezugszeichenliste

| | |
|---|---|
| 1 | redundanter Roboter |
| 1.1 - 1.7 | Gelenkkraftsensor (Erfassungsmittel) |
| 2 | Steuermittel |
| 2.1 | Verarbeitungsmittel |
| 2.2 | Überwachungsmittel |
| $q_1$ - $q_7$ | Gelenkwinkel (Minimalkoordinate) |
| TCP | Tool Center Point (roboterfeste Referenz) |

**Patentansprüche**

1. Verfahren zum Überwachen eines kinematisch redundanten Roboters (1), mit den Schritten:

   Erfassen (S10, S20) von Gelenkkräften ($\tau$, $\hat{\tau}_e$), die in Gelenken des Roboters wirken;
   Ermitteln (S30) einer externen Wirkkraft ($\boldsymbol{f}_W$) zwischen einer roboterfesten Referenz (TCP) und einer Umgebung auf Basis der erfassten Gelenkkräfte;
   Ermitteln (S40) einer weiteren Überwachungsgröße ($\hat{\tau}_{NS}$), die wenigstens im Wesentlichen unabhängig von einer auf die roboterfeste Referenz wirkenden externen Kraft ist, auf Basis der erfassten Gelenkkräfte; und
   Überwachen (S50, S60) der ermittelten externen Wirkkraft und der ermittelten weiteren Überwachungsgröße,
   wobei Gelenkkräfte mittels einer linearen Abbildung, insbesondere einer Pseudoinversen einer transponierten Jacobimatrix der roboterfesten Referenz, auf die externe Wirkkraft abgebildet werden und dieselben Gelenkkräfte mittels einer anderen linearen Abbildung, insbesondere eines Nullraumprojektionsoperators der Pseudoinversen der transponierten Jacobimatrix der roboterfesten Referenz, auf die weitere Überwachungsgröße abgebildet werden.

2. Verfahren nach dem vorhergehenden Anspruch, **dadurch gekennzeichnet, dass** eine Sicherheitsreaktion (STOP 1) ausgelöst wird, wenn die ermittelte externe Wirkkraft eine, insbesondere variabel vorgebbare, Überwachungsbedingung ($|\hat{\boldsymbol{f}}_W| > f_1$) erfüllt, und dass dieselbe oder eine andere Sicherheitsreaktion (STOP 0) ausgelöst wird, wenn die ermittelte weiteren Überwachungsgröße diese oder eine andere, insbesondere variabel vorgebbare, Überwachungsbedingung ($|\hat{\tau}_{NS}| > f_2$) erfüllt.

3. Verfahren nach einem der vorhergehenden Ansprüche, **dadurch gekennzeichnet, dass** die weitere Überwachungsgröße eine von der roboterfesten Referenz beabstandete externe Kraft umfasst, insbesondere ist.

4. Roboter (1), insbesondere mit wenigstens sieben Gelenken, und einem Steuermittel (2), das zur Durchführung des Verfahrens nach einem der vorhergehenden Ansprüche eingerichtet ist und ein Erfassungsmittel (1.1 - 1.7) zum Erfassen der Gelenkkräfte, ein Verarbeitungsmittel (2.1) zum Ermitteln der externen Wirkkraft und weiteren Überwachungsgröße, und ein Überwachungsmittel (2.2) zum Überwachen der ermittelten externen Wirkkraft und der ermittelten weiteren Überwachungsgröße aufweist.

5. Computerprogrammprodukt mit einem Programmcode, der auf einem von einem Computer lesbaren Medium gespeichert ist, zur Durchführung des Verfahrens nach einem der Ansprüche 1 bis 3.

**Claims**

1. A method of monitoring a kinematically redundant robot (1), wherein the method comprises the steps of:

   detecting (S10, S20) joint forces ($\tau$, $\hat{\tau}_e$), acting in joints of the robot;
   determining (S30) an external effective force ($\hat{\boldsymbol{f}}_W$) between a reference (TCP) fixed with respect to the robot and an environment on the basis of the detected joint forces;
   determining (S40), on the basis of the detected joint forces, a further monitoring variable $\hat{\tau}_{NS}$) which is at least substantially independent of an external force acting on the reference fixed with respect to the robot; and
   monitoring (S50, S60) the determined external effective force and the determined further monitoring variable,
   wherein joint forces are mapped onto the external effective force by means of a linear mapping, in particular a pseudo inverse of a transposed Jacobian matrix of the reference fixed with respect to the robot, and
   the same joint forces are mapped onto the further monitoring variable by means of a further linear mapping, in particular by means of a null space projection operator of the pseudo inverse of the transposed Jacobian matrix of the reference fixed with respect to the robot.

2. The method according to the preceding claim, **characterised in that** a safety reaction (STOP 1) is triggered when the determined external effective force fulfils a monitoring condition ($|\hat{\boldsymbol{f}}_W > f_1$), in particular

a monitoring condition ($|\hat{\boldsymbol{f}}_W| > f_1$) which can be variably predefined, and **in that** the same or a further safety reaction (STOP 0) is triggered when the determined further monitoring variable fulfils this or a further monitoring condition ($|\hat{\tau}_{NS}| > f_2$), in particular a further monitoring condition ($|\hat{\tau}_{NS}| > f_2$) which can be variably specified.

3. The method according to any one of the preceding claims, **characterised in that** the further monitoring variable comprises an external force, in particular is an external force, which is at a distance from the reference fixed with respect to the robot.

4. A robot (1), in particular a robot having at least seven joints, and a control means (2) which is set up to carry out the method in accordance with any one of the preceding claims, and a detection means (1.1 - 1.7) for detecting the joint forces, a processing means (2.1) for determining the external effective force and the further monitoring variable, and a monitoring means (2.2) for monitoring the determined external effective force and the determined further monitoring variable.

5. A computer program product comprising program code which is stored on a computer readable medium, for carrying out the method in accordance with any one of the claims 1 to 3.

**Revendications**

1. Procédé de surveillance d'un robot (1) cinématiquement redondant, avec les étapes :

   détection (S10, S20) de forces d'articulation ($\hat{\tau}$, $\hat{\tau}_{\boldsymbol{e}}$), qui agissent dans des articulations du robot ; détermination (S30) d'une force active externe ($f_W$) entre une référence solidaire du robot (TCP) et un environnement sur la base des forces d'articulation détectées ; détermination (S40) d'une autre grandeur de surveillance ($\hat{\tau}_{NS}$), qui est au moins sensiblement indépendante d'une force externe agissant sur la référence solidaire du robot, sur la base des forces d'articulation détectées ; et surveillance (S50, S60) de la force active externe déterminée et de l'autre grandeur de surveillance déterminée, dans lequel des forces d'articulation sont représentées au moyen d'une application linéaire, en particulier d'une pseudo-inverse d'une matrice jacobienne transposée de la référence solidaire du robot, sur la force active externe et les mêmes forces d'articulation sont représentées au moyen d'une autre application linéaire, en particulier d'un opérateur de projection dans l'espace nul de la pseudo-inverse de la matrice jacobienne transposée de la référence solidaire du robot, sur l'autre grandeur de surveillance.

2. Procédé selon la revendication précédente, **caractérisé en ce qu'**une réaction de sécurité (STOP1) est déclenchée, lorsque la force active externe déterminée remplit une condition de surveillance, en particulier pouvant être prédéfinie de manière variable, ($|\hat{\boldsymbol{f}}_W| > f_1$), et que la même ou une autre réaction de sécurité (STOP 0) est déclenchée, lorsque l'autre grandeur de surveillance déterminée remplit cette ou une autre condition de surveillance, en particulier pouvant être prédéfinie de manière variable, ($|\hat{\tau}_{NS}| > f_2$).

3. Procédé selon l'une quelconque des revendications précédentes, **caractérisé en ce que** l'autre grandeur de surveillance comprend, en particulier est, une force externe espacée de la référence solidaire du robot.

4. Robot (1), en particulier avec au moins sept articulations, et un moyen de commande (2), qui est aménagé pour la réalisation du procédé selon l'une quelconque des revendications précédentes et un moyen de détection (1.1 - 1.7) pour la détection des forces d'articulation, un moyen de traitement (2.1) pour la détermination de la force active externe et de l'autre grandeur de surveillance, et un moyen de surveillance (2.2) pour la surveillance de la force active externe déterminée et de l'autre grandeur de surveillance déterminée.

5. Produit de programme informatique avec un code de programme, qui est enregistré sur un support lisible par un ordinateur, pour la réalisation du procédé selon l'une quelconque des revendications 1 à 3.

## Fig. 1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. HATTORI ; K. OHNISHI.** A Realization of Compliant Motion by a Decentralized Control in Redundant Manipulator. *Proc. IEEE/ASME AIM 2001,* 08. Juli 2001, vol. 2, 799-803